(19) **Europäisches Patentamt / European Patent Office / Office européen des brevets**

(11) **EP 2 884 707 B1**

(12) **EUROPEAN PATENT SPECIFICATION**

(45) Date of publication and mention
of the grant of the patent:
**27.04.2016 Bulletin 2016/17**

(51) Int Cl.:
***H04L 12/841*** (2013.01)

(21) Application number: **13197547.6**

(22) Date of filing: **16.12.2013**

(54) **Method for controlling buffering of packets in a communication network**

**Verfahren zur Steuerung der Pufferung von Paketen in einem Kommunikationsnetzwerk**

**Procédé de commande de mise en mémoire tampon de paquets dans un réseau de communication**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**17.06.2015 Bulletin 2015/25**

(73) Proprietor: **ALCATEL LUCENT**
**92100 Boulogne-Billancourt (FR)**

(72) Inventor: **Lautenschlaeger, Wolfram**
**70435 Stuttgart (DE)**

(74) Representative: **Wetzel, Emmanuelle**
**Alcatel Lucent**
**Intellectual Property & Standards**
**70430 Stuttgart (DE)**

(56) References cited:
**EP-A1- 2 040 423    US-A- 5 914 936**

**Description**

Background

TCP traffic, which is the majority of the Internet traffic, requires large buffers to efficiently fill the transmission capacities. The Bandwidth * Delay product rule for buffer dimensioning is dominating since decades. However, large buffers in combination with TCP traffic cause large queuing delays and jitter which is bad for real time applications. On the other hand, devices with smaller buffers, e.g. some Ethernet switches, do not reach the capacity limit at large round trip times.

Conventionally, a buffer drops the packets at the tail of the queue which it cannot buffer any more, because it is full. This is also termed "tail drop" as the packets are dropped at the tail of the queue at the moment of the decision whether to put and keep packets in the queue of the buffer or to drop the packets at the tail of the queue If the transmission capacity is constantly exceeded, any buffer is overflowing, regardless of its size. In other words, buffers are there to cope with short term overloads by keeping the excess load in a queue for subsequent release when the overload is over. As a consequence buffers should be empty most of the time.. If however a buffer is large but full all the time it cannot absorb short term overloads anymore and, even worse, adds unneeded queuing delay, which might be called "bufferbloat".

If a network becomes congested, the buffers of the network are permanently full. As it is rather a question of chance of which packet flows the packets are buffered or dropped, tail drop is regarded as unfair. In case of dropped packets, the sender of the packet flows which get informed by the receiver of the traffic flows that packets are missing reduce the data-rate of the packet flows by sending less packets per second. In case packets of a plurality of traffic or packet flows are dropped by the buffer, correspondingly a plurality of senders will reduce the data-rate of the plurality of traffic flows which might lead to underutilization of the transmission capacity. If after some time all senders restart sending packets with increased data-rate this might again lead to congestion. This common reaction of reducing and increasing of the data-rate of many senders of packet flows with the consequence of either underutilization or congestion of the transmission links and thus of the network is also called "global synchronization". Global synchronization is aimed to be avoided.

Currently, some Active Queue Management (AQM) schemas such as RED (Random Early Detection) and CoDel (Controlled Delay) are implemented. RED determines the average queue size of the queue of packets stored in the buffer. Based on statistically determined probabilities, packets are dropped or stored in the buffer. The probability of dropping packets increases as the queue gets filled. As dropped packets cause the receiver of a packet flow in which packets are missing to inform the sender of the packet flow of the dropped or missed packets, the dropping of the packets by the buffer might be understood as an implicit congestion notification of the buffer. This is by dropping packets, the buffer implicitly notifies that the buffer is congested. As an alternative to this implicit congestion notification by dropping packets, packets are stored in the buffer (as long as the maximum capacity is not exceeded) and the packets are marked by an explicit congestion notification (ECN) to notify that the buffer has reached a predetermined limit. This explicit congestion notification will also cause the receiver of the packet flow comprising marked packets to inform the sender of the packet flow to reduce the data-rate of the packet flow. The drawback of RED is that this solution is hard to deploy, because this implementation needs setting many parameters dependent on the network conditions, which might be unclear and quite impossible to implement from the perspective of the operator of the buffer.

In contrast to RED, the CoDel does not need to set parameters such as in RED. CoDel determines the queuing delay at each hop of the network over an interval which is initially set to 100 milliseconds. When a packet is put out of the buffer for forwarding the packet, the queuing delay of this packet is determined and used to decide of the packet is dropped or forwarded, causing also the interval to be shortened or reset to the initial value, respectively. However, the results of CoDel to avoid the bufferbloat problem and to avoid congestion of the network are determined to be not really better than plain tail drop and worse than well tuned RED.

Alternatively, for large traffic aggregates with more than 500 TCP flows and large spreading of round trip times, for example at Internet backbones, the Bandwidth * Delay product rule has been reduced by a 1/sqrt (N) factor (N = the number of TCP flows, sqrt = square root) by implementing plain tail drop. Nevertheless, it is not applicable for N < 100 and also not for uniform RTT (round trip time) distributions like e.g. on interconnection links between large data centers. The round trip time indicates how long it takes between the sending of a signal or a packet and the receiving of an acknowledgment from the receiver of the signal at the sender, by which acknowledgment the receiver indicates that he has received the signal or not, or he has received a packet flow but some packets are missing. In more general, the round trip time could be explained as the time that a signal takes from a start point of the way to the end point plus the time that a corresponding signal takes from the end point to the start point. The round trip time might be about 100 - 300 milliseconds in Internet scales.

An example of the prior art can be found in US5914936.

Summary

The present invention aims to provide an improved solution to the bufferboat problem and to provide improved congestion avoidance, in particular to avoid global synchronization.

This objective of the invention is achieved by a method for controlling buffering of packets in a communication network. The method comprises to store packets of one or more packet flows in a queue of a buffer, to set a threshold on the queue and to determine whether the queue exceeds the threshold. If the queue exceeds the threshold, a congestion notification is provided on a first packet of the queue which causes the exceeding of the threshold and a timeout interval is started. Until expiry of the timeout interval, any threshold violation is ignored. This means, even if it is determined that further packets of the queue cause the queue to exceed the threshold, a congestion notification on these "exceeding" or "excess causing" packets is not provided. Thus, the threshold violation of the queue caused by these packets is ignored by not providing a congestion notification on further packets of the queue causing the exceeding of the threshold during the timeout interval. In this context, if it is said that packets exceed the threshold or the term exceeding packet(s) is used, it is more precisely meant that the queue is caused by theses packet(s) to exceed the threshold.

The objective of the present invention is further achieved by a network element for a communication network. The network element is adapted to store packets of one or more packet flows in a queue of a buffer, to set a threshold on the queue, to determine whether the queue exceeds the threshold and, if the queue exceeds the threshold, to provide a congestion notification on a first packet of the queue causing the exceeding of the threshold and to start a timeout interval. Furthermore the network element is adapted to ignore any threshold violation by further packets until expiry of the timeout interval. This means the network element is adapted not to provide a congestion notification on further packets of the queue causing the exceeding of the threshold during the timeout interval.

Furthermore, the objective of the present invention is achieved by a computer program product adapted to perform the above cited method for controlling buffering of packets in a communication network, when executed on a control unit. The control unit may be implemented as a single unit, a stand-alone device, or within a database, integrated in a computer and/or within a computer network.

The features of embodiments both of the independent claims and of the dependent claims of the present invention might be implemented in hardware, software or combination thereof.

In particular, the network element and/or the control unit may be implemented through the use of hardware, software and/or hardware capable of executing software in association with appropriate software.

More specifically, the network element and/or the control unit can be comprised or implemented by circuit-based processes, including possible implementation as a single integrated circuit, such as an ASIC (= Application Specific Integrated Circuit) or such as an FPGA (= Field Programmable Gate Array), a multi-chip module, a single card, or a multi-card circuit pack. The functions of the network element and/or control unit may be implemented as processing blocks in a software program. Such software may be employed in a digital signal processor, micro-controller, or general-purpose computer implemented as a single device or integrated in a computer network.

The network element and/or the control unit may comprise program code embodied in tangible media, such as magnetic recording media, optical recording media, solid state memory, floppy diskettes, CD-ROMs, hard drives, or any other machine-readable storage medium, wherein, when the program code is loaded into and executed in the network element and/or the control unit, the network element and/or the control unit become an apparatus used for practicing the invention.

Further advantages of the present invention are achieved by features of preferred embodiments. The features of preferred embodiments might be implemented in any suitable manner, in particular in combination with the features of further preferred embodiments thus leading to again further preferred embodiments. The features disclosed within one preferred embodiment might also be implemented without one or more features of the same preferred embodiment in case the one or more features of the preferred embodiment are not mandatory for implementing the preferred embodiment. Thus, one or more features of one or more preferred embodiments might be implemented in any suitable manner resulting in further preferred embodiments.

In a preferred embodiment, the timeout interval is set in the range of 1 to 3 round trip times. The round trip time might be defined as the time it takes for a signal, e.g. a packet of a packet flow, to go from one point of a communication path, for example from the sender of the signal or packet, to another point of the communication path, for example to the receiver of the signal or packet, plus the time it takes for the signal or packet or a corresponding signal, for example response or acknowledgment message, to go the same way back. During the timeout interval, the violation of the threshold is ignored. If the queue exceeds the threshold and there is no timeout interval running, a congestion notification is provided. This congestion notification finally gets to the sender of the packet flow and causes the sender to reduce the data rate of the packet flow. The reduction of the data rate will take effect only at the moment when the packet flow with the reduced data rate comes to the buffer. It is one objective of the present invention to avoid global synchronization. Thus, it is implemented not to reduce the data rate of all packet flows or of many packet flows which are processed by the buffer even in case many packets of these packet flows cause the queue to exceed the threshold. Actually, after a first packet of a (first) packet flow is determined to exceed the threshold or in other words cause the queue to exceed the threshold, only on this packet a congestion notification is provided. Because of the congestion notification on this packet the sender of the packet flow to which this first packet belongs will reduce the data rate of said packet flow. Preferably, the congestion notification provided by the buffer will be determined by the receiver of the packet flow. The receiver of the packet flow will consequently inform the sender of the packet flow to reduce the data rate of the packet flow. However, it will take the time that the congestion notification is received by the sender and the time that packets with the reduced data rate get to the buffer, until the reduction of the data rate of the packet flow takes effect. During this time, preferably no further packet flows should be caused to reduce their data rates or more precisely the sender of the further packets flows to reduce the date rate of these further packet flows even in case the packets of the packet flows exceed the threshold. It is desired to await if for example the reduction of the data rate of the first packet flow is enough to avoid buffer overflow, or at least that the number of packets exceeding the threshold is reduced. This is, because the data rate of the first packet flow is reduced, the buffer will have to process less packets in total so that further reduction of date rates of one or more further packet flows might not be necessary any more. However, as described it will take at least one round trip time for the reduction of the data-rate of the first packet flow to take effect. Therefore, the timeout interval might be set at one round trip time (RTT). However, the timeout interval might be set at higher values, for example at two round trip times. This is, because the round trip time is typically unknown to the queue manager and therefore a reasonable (worst case) guess is applied. Furthermore, typically in practice sub-RTT burstiness of flows might cause another RTT delay until effective rate reduction takes effect. This is because, the packets are often processed, sent or buffered, bulk-wise. Therefore, the receiver of a packet flow or the sender of a packet flow which receives an acknowledgment message might need more time to determine that a packet is missing or that a congestion notification is received. Therefore, the timeout interval might be set at two RTT. Furthermore, it might be preferable that the timeout interval is set at three RTT times. By a longer timeout interval the violation of the threshold is ignored for a corresponding longer time period thus resulting that the reduction of the data rate of more packet flows is avoided which despite exceeding the threshold are sent with their initial, un-reduced data rate. By this the transmission capacity is better used, because otherwise too many data flows would have reduced their data rate leading to an empty buffer and, in consequence, an idle transmission link.

In a preferred embodiment, the timeout interval is dynamically adapted, based in particular on the time that the queue is above the threshold and the time that the queue is below the threshold. During the timeout interval, packets exceeding the threshold are not provided with a congestion notification. A congestion notification causes the sender of the corresponding packet flow to reduce the data rate of the packet flow. The reduction of the datarate of the packet flow takes effect only at least one round trip time later as the congestion notification is provided. In normal operation after the timeout the queue size should be below the threshold due to the one flow has reduced its data rate. However, there might be operational conditions, where this single reduction is not sufficient to drop below the threshold. Or there might be operational conditions where after the drop below the threshold the subsequent data rate increase is so fast that at timeout expiration the threshold is already violated for the next time. Both cases are characterized by the queue being most of the time above the threshold. Both cases can be avoided by an adaptation towards shorter timeouts. Briefly, therefore, it might be preferable to adapt the timeout interval dynamically. In principle, the longer the timeout interval is, the more often a violation of the threshold is ignored, thus the packet flows will increase their data rate. The shorter the timeout interval is, the more often packets exceeding the threshold will be provided with a congestion notification thus leading the sender of the packet-flow to reduce the data-rate of the respective packet flow. In the first case, due to too many packets in the buffer and no congestion notification during the timeout interval, there might be too many packets causing possibly the queue to reach the maximum capacity of the buffer leading to tail drop of packets which can not be buffered any more. In the second case, there might be too less packets in the sense that the buffer capacity is not fully used. Therefore, the timeout interval is preferably adjusted according to the actual traffic characteristics. Particularly, if the number of TCP flows is large, the timeout interval should be smaller than the initial timeout interval setting.

In this context, it should be noted that the number of TCP flows might be defined as large, if there are more flows than the typical congestion window size of one of the flows. Each sender of a packet flow has typically determined a congestion window size for each packet flow. The congestion window size is an amount of packets of the packet flow which the sender will sent, even if the sender has not yet any acknowledgement of the packets to be received or not. In other words, a sender of data packets sends packets and waits for an acknowledgement e.g. of successful reception of the packets or of missed packets from the receiver of the packets. As long as the sender did not yet receive any acknowledgement for a particular packet, this packet is called packet in flight. The sender does not send any further packets of a packet flow, if the amount of packets in has reached a predetermined value which is determined by the congestion window size. Only if the sender receives acknowledgment for a packet (which is then no packet in flight any more), the sender will send another packet which is a packet in flight until acknowledgment for this packet is received. The amount of packets in flight is determined by the congestion window size of the packet flow. Accordingly, in preferred embodiments, the number of TCP flows in the network is defined as large, if the number of TCP flows is more than the typical congestion window size of one of the flows.

In a preferred embodiment, the timeout interval is determined as a function of the value of the initial interval, such as the interval is set at the beginning of implementing the method of controlling the buffering of the packets, the time that the queue is above the threshold, the time that the non-empty queue is below the threshold and a scaling parameter gamma. The cumulative time of the time that the queue is above the threshold and the time that the queue is below the threshold, but not empty, is calculated, this is the time that the queue is above the threshold is reduced by the time that the queue is below the threshold, but not considering the time that the queue is empty. The time that the queue is empty is not considered, because the time of an empty queue is not relevant for the setting or adapting of the timeout interval. The time that the queue is empty because of too small traffic offer is not relevant for setting or adapting the timeout interval. The difference is the cumulative time, which is defined as the variable theta. The variable theta is multiplied by a predetermined scaling parameter gamma that controls the sensitivity of adaptation. If the product of gamma and theta is greater than "one", then the variable k is defined as the value of the product of gamma and theta. If the product of gamma and theta is smaller than "one", then the variable k is defined with the value "one". This means k is at least one. The adapted interval is determined by dividing the initial interval by the variable k. If k is one, the adapted interval is the same as the initial interval. If k is greater than one, the adapted interval is reduced in comparison with the initial interval. Preferably, the timeout interval (= interval in the formula) is determined by the formula:

$$\theta := \text{cumulative time (above -- below) threshold}$$

$$k := \max(1, \text{gamma} * \theta)$$

$$\text{interval} := \text{initial\_interval}/k$$

During the timeout interval, a violation of the threshold by the queue is ignored. If it is determined that the queue exceeds the threshold before the timeout interval has expired, no further congestion notification is provided. This means, the one or more packets of the queue which are above the threshold and thus violating the threshold are not provided a congestion notification. In preferred embodiment, even the step of determining a congestion violation within the timeout period is not implemented, this is it is not even determined at all during the timeout period if the queue exceeds the threshold.

Preferably, if after expiry of the timeout interval, it is determined that the queue still exceeds the threshold, a congestion notification is provided on the first packet causing after expiry of the timeout interval the queue to exceed the threshold.

Preferably, if after expiry of the timeout interval, the queue does not exceed the threshold, no congestion notification is provided. However, if the queue then exceeds again the threshold and there is no timeout interval running, a congestion notification is provided on the first packet of the queue causing the queue to exceed the threshold.

In a preferred embodiment, the timeout interval is started or restarted, if the queue is determined to be empty. This is the timeout interval is not only started, if a congestion notification is provided on a packet, but also if the queue is found to be empty. It might happen that the packets of the queue which have been stored in the buffer are all forwarded, this means taken out of the buffer or out of the queue. At this moment, the queue is empty, because there are no packets in the buffer. Accordingly, the sender(s) of the packet flows might increase the data rates very much, because the sender(s) of the packet flows are not aware of any bottle neck within the network, as the packets are forwarded and no congestion notification is provided to the sender(s). Accordingly, due to the strong increase of data rate, a burst of packet flows might occur. It might be preferable to prevent large packet bursts from immediately triggering a congestion notification in case a first packet exceeds the threshold. Therefore, the timeout interval during which any threshold violation is ignored, is started or restarted, in case the queue is found to be empty.

In preferred embodiments, the threshold is dynamically adapted. Without adapting the threshold, the queue could oscillate around the threshold far away from zero, thus the queue being constantly far away from empty, which means an unnecessary queuing delay. In a preferred embodiment, the threshold can be decreased if the queue does never drain empty over a predetermined time frame, e.g., 1 to 10 seconds. In a preferred embodiment, the threshold can be decreased if the queue hits the buffer size (tail drop) during the timeout interval. Preferably, the threshold can be piecemeal increased if neither of both conditions occurs. Preferably, the threshold can be piecemeal increased, if the queue drained empty over a predetermined time frame, e.g. 1 to 10 seconds. Preferably, the threshold can be piecemeal increased, if the queue did not hit the buffer size during the timeout interval. Preferably, the threshold can be piecemeal increased, if the queue drained empty over a predetermined time frame, e.g. 1 to 10 seconds, and the queue did not hit the buffer size during the timeout interval, wherein preferably the predetermined time frame and the timeout interval might overlap at least partially.

In a preferred embodiment, the threshold is dynamically adapted so that the queue drains to zero at least once in a predetermined time frame. It might be preferable that the queue is empty at least once in a predetermined time frame, e.g. 1 to 10 seconds. In case within the predetermined time period, the queue actually drains to zero at least one time, i.e. is empty at least one time, the threshold might be kept as it is. In case within the predetermined time period, the queue does not drain to zero least for one time, the threshold is reduced, i.e. set at a lower level. In case, during the predetermined time frame, the queue drains to zero for example several times, in particular for a predetermined amount of times, e.g. four times, the threshold is preferably set to a higher value, which might be the value before the threshold had been reduced or another higher value as the reduced value. Similarly, in case during the predetermined time frame, the queue keeps on being empty for a predetermined time period, e.g. 50 milliseconds, the threshold is set to a higher value, which might be the value before the threshold had been reduced or another higher value as the reduced value.

In a preferred embodiment, the setting of the threshold is based on queue size. In particular, the queue size might be defined by a length of the queue or a volume of the queue. In this case, the queue exceeds the threshold, if the amount of packets in the queue is greater than the amount of packets which is determined as the threshold of the queue. For example, the threshold is set at a value of 100 000 packets. Then, the queue exceeds the threshold, if the queue has more than 100 000 packets. In other words, the 100 001st packet is the first packet of the queue which causes the queue to exceed the threshold. It might also be said the 100 001st packet is the first packet exceeding the threshold.

For exemplary reasons, in the above described embodiments, this 100 001st packet is the packet on which the congestion notification is provided, as this packet is the first packet of the queue exceeding the threshold.

In a preferred embodiment, it is determined at enqueuing of the packets of the one or more packet flows in the queue if the queue exceeds the threshold. Packets which arrive at the buffer are typically processed by the buffer by storing the packets in the queue in the buffer, which is termed as enqueuing (the packets in the queue, thus in the buffer). As mentioned above, in case it is determined that the queue exceeds the threshold due to the packets exceeding the threshold, on the first packet of the queue which actually exceeds the threshold, a congestion notification is provided.

The congestion notification might be provided by dropping the packet. In this case, the first packet of the queue exceeding the threshold is dropped. If the packet is dropped, the packet is not kept in the buffer and thus is not forwarded out of the buffer to the receiver of the corresponding packet flow. The receiver of said packet flow determines that the packet flow misses the packet which is dropped at the buffer. Accordingly, the receiver of the packet flow sends a message to the sender of the packet flow informing the sender of the missing packet. The sender is informed of the missing packet. The sender, however, knows, that it has sent the packet on the way to the receiver. Consequently, the sender concludes that the packet which has not reached the receiver must have been lost on the way to the receiver, in particular that the packet might have been dropped by a buffer. The sender knows that a buffer in general drops packet(s) of a packet flow, in case the buffer can not process, i.e. buffer and forward, all packets arriving at the buffer, in particular because the data rates of one or more of the packet flows to which the packet(s) belong are too high and thus there are too many packet(s) at the buffer. Consequently, the sender of the packet flow with the missing packet reduces the data rate of the packet flow to which the missing packet belongs. Conclusively, by dropping a packet of a packet flow the buffer notifies the receiver of a congestion of the buffer. Therefore, the dropping of a packet is a congestion notification provided on the dropped packet. The congestion notification on a packet by dropping the packet might be termed as "implicit" congestion notification. The receiver of the packet flow to which the dropped packet belonged is notified implicitly of the congestion, because the receiver will determine that in the packet flow a packet is missing, namely the dropped packet. Then, the receiver communicates a corresponding message about the missing packet and therefore potentially about the congestion of the buffer to the sender of the packet flow to which the dropped packet belongs.

In a preferred embodiment, a congestion notification by the buffer is provided by marking the first packet of the queue exceeding the threshold. The marking of the first packet might be provided by providing an input in the header fields of the packet indicating the congestion of the buffer. The marking of the first packet might be setting a value in a packet header field. The marking of a packet to notify the receiver of the packet of the congestion of the buffer is termed explicit congestion notification. The receiver of the explicit congestion notification, i.e. of the packet comprising the indicated congestion notification, sends a corresponding message to the sender of the packet flow to which the marked packet belongs informing the sender about the congestion notification of the buffer.

In a preferred embodiment, a first packet exceeding the threshold might be marked and subsequently dropped. In this case, the marking of the packet might be regarded as an indication that the packet is to be dropped preferably if dropping is needed.

In a preferred embodiment, the threshold is set below a maximum capacity of the buffer, in particular at less than 60% of the buffer size, preferably at less than 50% of the buffer size.

The lower the threshold is set, the more likely and/or the more frequently in principle a packet causes the queue to exceed the threshold. If the threshold is set to a low value, the queue will often exceed this low value resulting in a packet to be dropped or marked. The packet which is dropped is the first packet will causes the queue to exceed the threshold. The queue comprises the packets of packet flows arriving at the buffer. The buffer processes the packets by putting the packets in the queue (enqueuing), storing the packets and putting the packets out the queue (dequeuing). Because of the arriving packets, the queue might be rising as more packets arrive at the buffer than are put out of the buffer. Therefore the packets filling up the buffer, the queue of the packets in the buffer gets longer and longer.

In a preferred embodiment, the threshold is set on the size of the queue, in particular on the length of the queue. Preferably, the size of the queue might be determined in terms of packets. Preferably, the size of the queue might be determined in terms of bytes. As the packets arrive at the buffer, the queue length increases, if more packets arrive at the buffer than can be processes by the buffer, in particular by dequeuing the packets out of the packets and forwarding the packets. As more packets arrive at the buffer for enqueuing than packet which are put out of the buffer at dequeuing, at a certain moment the length of the queue will exceed the threshold. In other words, in principle each new arriving packet makes the queue longer, and each packet being put out of the buffer at dequeuing makes the queue shorter. As more packets arrive at the buffer than packets leave the buffer, the queue length increases and there is a first packet which can be determined as causing the queue to exceed the threshold. In other words, one of the packets arriving at buffer and put in the queue will be the first packet by which the length of the queue exceeds the threshold, because in this example the length of the queue is more than the length determined by the threshold. The length of the queue might be indicated by the number of packets which are in the queue. If the number of packets exceeds the number of packets determined by the threshold, the queue exceeds the threshold. The first packet is the packet of the queue by which the number of the queue is higher than the number of packets determined by the threshold. According to the implementation, the first packet is the packet of the queue by which the length of the queue is longer than the length of the queue determined by the threshold. Further according to the implementation, the first packet is the packet of the queue by which the volume of the queue is larger than the volume of the queue determined by the threshold.

In a preferred embodiment, the threshold is set on queuing delay. The packets of the one or more packet flows are stored in the buffer, until they are put out of the buffer for forwarding. The time that the packets have been stored in the buffer, until being put out of the buffer, this is until dequeuing, is termed queuing delay. According to the implementation, it is determined at every dequeuing of a packet, how long the packet has been stored in the buffer, this means how long is the queuing delay of the packet. Although this packet could be regarded as ready for forwarding to the receiver, because the packet just has been put out of the buffer, this means the buffering of the packet has been successfully processed, nevertheless this packet might be dropped or at least marked with a congestion notification. This is at every dequeuing of each packet, the queuing delay of the packet is determined. It might be determined that the queuing delay of the packet is too long. In particular, it might be determined that the queuing delay exceeds a predetermined value indicated by a threshold which is in this case set on the queuing delay. In other words, it might be determined that the queue exceeds the threshold which is set on queuing delay. Again in other words, it might be determined a packet of which the queuing delay exceeds the threshold set on queuing delay. Accordingly a congestion notification is provided on a packet. The congestion notification is provided on the first packet of the queue which exceeds the threshold set on queuing delay.

In summary, on each packet stored in the buffer the queuing delay which is the time period that the packet is stored in the buffer is determined. If the packets can not be forwarded within the time of queuing delay determined by the threshold, in particular if the capacity of the network of forwarding the packets out of the packets is not sufficient, the queuing delay of the packets increases more and more. Therefore, at a certain moment or from a certain moment on, the packets are stored longer than the time which is determined by the threshold. At a certain moment the queuing delay is longer than the time period determined by the threshold. The first packet on which it is determined that the queuing delay is longer than the time period of the queuing delay set by the threshold, is the packet on which a congestion notification is provided. The congestion notification on the first packet causing the queue to exceed the threshold might be provided by dropping the packet or marking the packet or marking and dropping the packet. Analogously, to the above described embodiments, the congestion notification by dropping and/or marking the packet causes the sender of the packet flow to which the dropped and/or marked packet belongs to reduce the data rate of the packet flow to which the dropped and/or marked packet belongs.

Preferably, the threshold is set below a maximum predetermined delay assigned to the one or more data flows (or packet flows). In a preferred embodiment, to the one or more data flows, more precisely to the packets of one or more of the one or more data flows a maximum delay might be predetermined. For example, a data flow might carry a particular application, which might be in particular a real time application such as IP-telephony. Accordingly, the buffer delay of the packets of said application should be rather low. Therefore, a threshold is set to the delay of the packet of said data flow at a rather low value. The threshold is in particular set below a maximum predetermined delay to the data flow. As the threshold is set below the maximum predetermined delay, a packet of the data flow which causes the queue to exceed the threshold is dropped and/or marked so that consequently the sender of the packet flow is caused to reduce the data rate of the packet flow or alternatively look for another path through the communication network for transporting the packet flow. The threshold is set below a maximum predetermined delay assigned to the data flow in particular so that the data rate of the packet flow might be reduced or an alternative path is found for the data flow before the quality of the data transport becomes too worse. In other words, if the notification message is provided only at the moment at which the maximum predetermined delay is reached, the quality of the data transport of the packet flow might be already very bad due to the large buffer delay. As the threshold is set below the maximum predetermined delay a notification message upon excess of the threshold is already provided at a moment at which the quality of transport might still be acceptable. It is not awaited until the maximum predetermined delay of the packet is reached for providing a notification message, because the notification messages is already provided at the moment of and due to the excess of the threshold by the queue below the maximum predetermined delay. In other words, the data rate of the packet flow is reduced or an alternative path for the packet flow is searched and possibly chosen while the quality of transport of the packet flow is still acceptable or at least better than if the congestion notification was provided only in case the maximum predetermined delay would have been reached or excessed by the queue.

Brief description of the figures

The features and advantages of the present invention will be more readily understood by studying the following preferred embodiments with reference to the following figures of which

Fig. 1    depicts a schematic diagram of steps of a method for controlling buffering of packets in a communication network

Fig. 2    depicts a schematic diagram of steps of a method for controlling buffering of packets in a communication network

Fig. 3    depicts a schematic diagram of steps of a method for controlling buffering of packets in a communication network

Fig. 4    depicts a schematic diagram of steps of a method for controlling buffering of packets in a communication network

Fig. 5    depicts a schematic diagram of steps of a method for controlling buffering of packets in a communication network

Detailed description

The following preferred embodiment are for illustrative reasons only, the scope of the invention is defined by the claims. In particular, the features of preferred embodiments might be implemented within a preferred embodiment and/or in combination with features of other preferred embodiments. Thus, the features of preferred embodiments might be implemented in any suitable manner resulting in further preferred embodiments.

In more detail, it will be readily understood that the components or features of the present invention, as generally described and illustrated in the figures herein, may be arranged and designed in a wide variety of different configurations. Thus, the following detailed description of the embodiments of a method and apparatus as represented in the attached figures, is not intended to limit the scope of the invention as claimed, but is merely representative of selected embodiments of the invention. The features, structures, or characteristics of the invention described throughout this specification may be combined in any suitable manner in one or more embodiments. For example, the usage of the phrases "example embodiments", "some embodiments", or other similar language, throughout this specification refers to the fact that a particular feature, structure, or characteristic described in connection with the embodiment may be included in at least one embodiment of the present invention. Thus, appearances of the phrases "example embodiments", "in some embodiments", "in other embodiments", or other similar language, throughout this specification do not necessarily all refer to the same group of embodiments, and the described features, structures, or characteristics may be combined in any suitable manner in one or more embodiments.

Furthermore as a general remark, it is to be noted that while the method of controlling buffering is described for the buffering of packets, the method is in further embodiments also applicable on frames, segments etc., more generally on every level of the OSI-reference model.

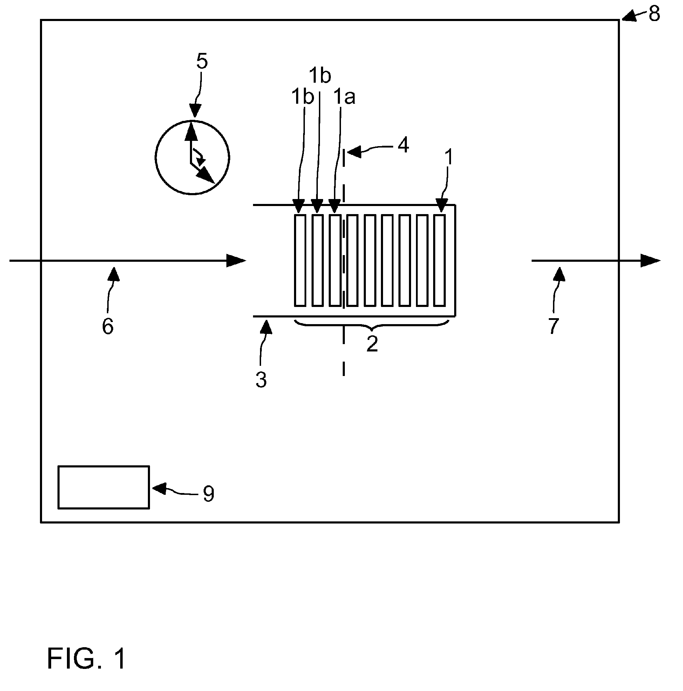

Figure 1 depicts a buffer 3 for storing packets 1 in a queue 2. The packets 1 comprise also the packets which are specifically indicated as packet 1 a and packets 1b. The packets 1 are put into the queue 2 of the buffer 3. The putting of the packets 1 in the queue 2 of the buffer 3 is called enqueuing and is indicated with reference sign 6. As the packets 1 are typically stored in the buffer 3, until the further forwarding of the packets 1 is possible due to the bandwidth of the forwarding elements, finally the packets 1 are put out of the queue 2 which is called dequeuing and indicated with reference sign 7. Furthermore, the buffer 3 is part of a network element 8 which comprises also a control unit 9 which is adapted to control the buffering of the packets 1 in the queue 2 of the buffer 3. The control unit 9 might be integrated in the network element 8 or might be a separate device connected to the network element 8.

Typically, for storing packets in a buffer such as buffer 3, the packets e.g. packets 1 are put into the queue such as queue 2 of the buffer 3, until the queue 2 reaches the maximum buffer capacity so that no more packets can be stored any more. The maximum buffer capacity could be termed as buffer limit or buffer size limit or buffer size. Without the implementation of the teaching of the present application, all packets 1 are stored until the maximum capacity of the buffer 3 is reached and then further packets 1 which cannot be stored any more are all dropped. Each of the dropped packets 1 will cause a reduction of the data rate of the packet flow to which the respective packet 1 belongs. This is, as the receiver of a packet flow to which a dropped packet 1 belongs determines that the packet flow does not comprise the packet 1, the receiver informs the sender of the packet flow of the missed packet and the sender reduces the data rate of the packet flow. This means that if many packets 1 are dropped, because many packets 1 cannot be stored any more in the buffer 3, because the buffer 3 is simple full as the queue 2 has reached and still is at the buffer size limit, typically many packet flows will be caused to a reduced data rate, namely each packet flow of which at least one packet 1 is dropped will reduce their data rate. Therefore, as soon as the reduction of the data rate takes effect, the queue 2 will decrease very much thus emptying the buffer and leaving the transmission capacity unused.

Therefore, according to the present invention a threshold 4 is set on the queue 2 such that a reduction of the data rate of only one packet flow is achieved, before the maximum buffer capacity is reached so that further packets 1 of the same or of further packets flows can be stored in the buffer 3. As only one packet 1 is dropped or marked thereby providing a congestion notification finally to the sender of the data flow, only the data rate of one packet flow, namely the packet flow of which the packet 1 is dropped (or marked) is reduced. Therefore, the queue 2 does not decrease so much and the transmission capacity is better used.

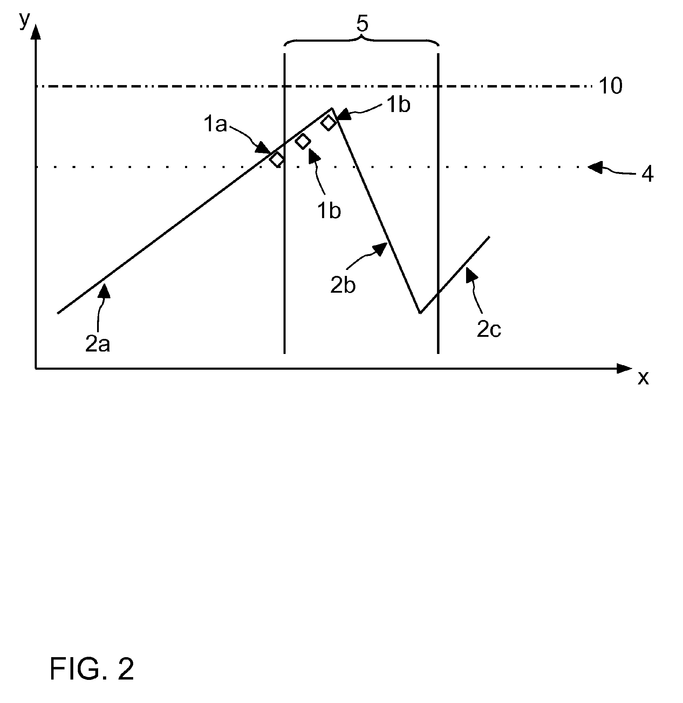

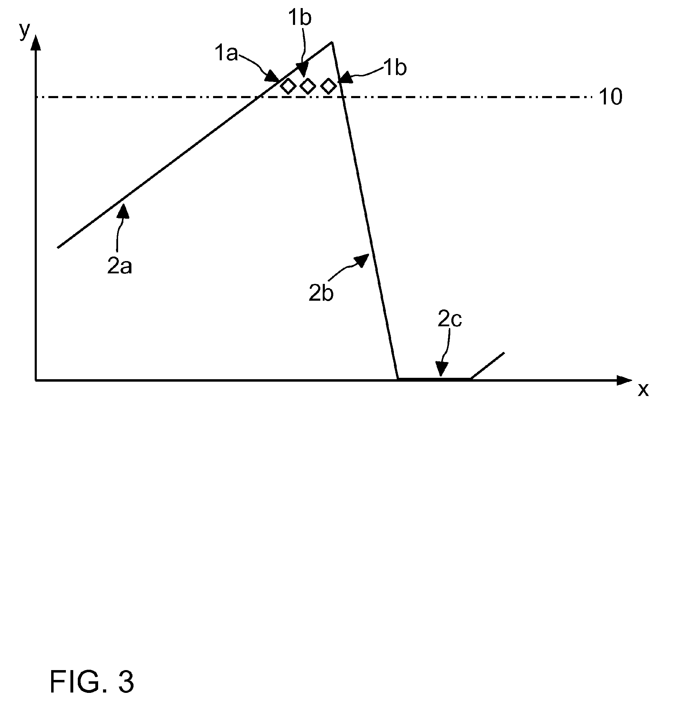

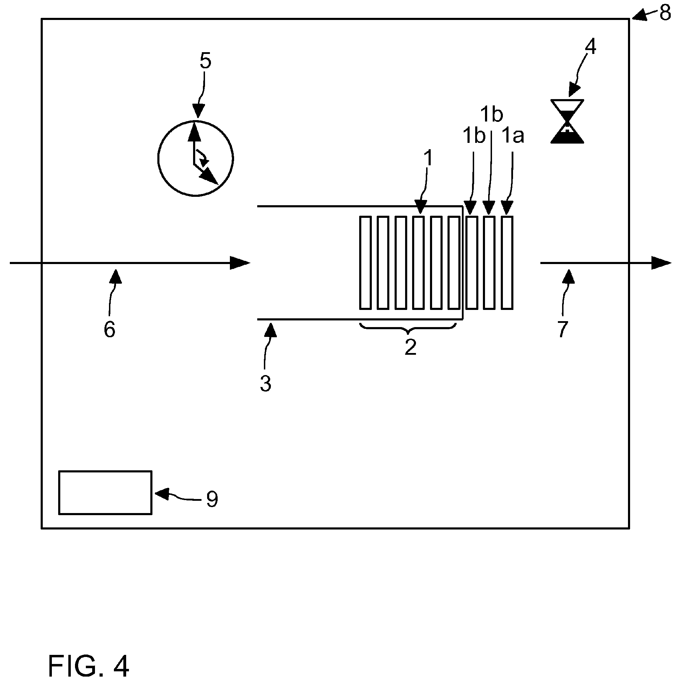

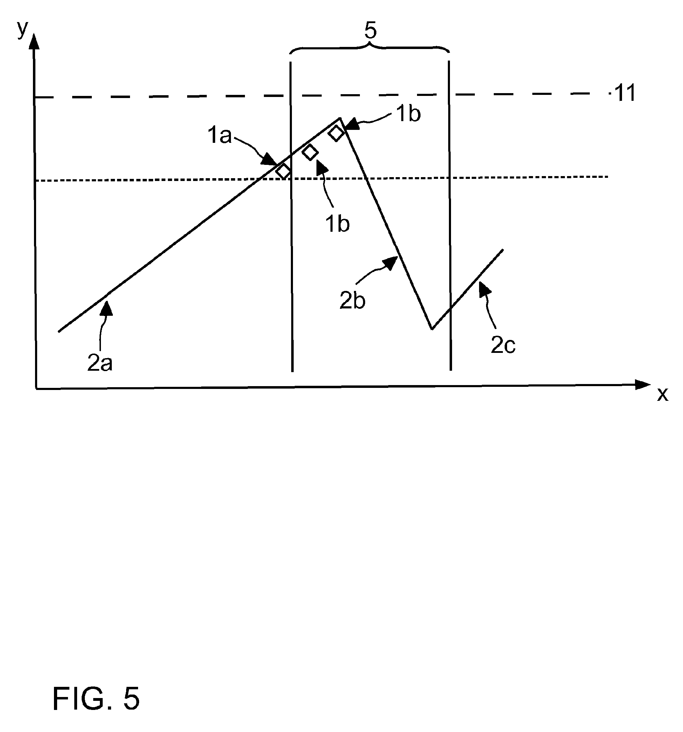

What has been described above as a summary, will again be described in more detail with reference to figures 1 to 5. Figure 1 which has been already described in part and figure 2 relate to the teaching of the present invention, whereas figure 3 depicts what might happen, if packets are stored in a buffer without implementing the teaching of the present invention. Figures 4 and 5 relate to further preferred embodiments of the present invention which will be described later below.

The packets 1 are stored in the queue 2 in the buffer 3 and a threshold 4 is set on the queue 2. The threshold 4 is shown in figure 1 and also in figure 2. Figure 3 does not show the threshold 4, because in the implementation illustrated in figure 3 without the teaching of the present invention, there is no threshold 4.

In figure 1 the packets 1 are stored in the queue 2 of the buffer 3. It can be appreciated in figure 1 that the threshold 4 is set on queue size. The threshold 4 might be defined as a certain number of packets 1. As soon as the number of the packets 1 stored in the buffer exceeds the number defined as the threshold 4, the queue 2 of the packets 1 exceeds the threshold 4. Figure 1 shows for illustrative reasons three packets 1 which exceed the threshold 4. These packets 1 are specifically indicated as one packet 1a and two packets 1b. Typically, there are many more packets 1b, but there is only one packet 1a. The packet 1 a is the first packet by which the number of the packets 1 stored in the queue 2 is bigger than the number of packets 1 which is defined as the threshold 4. It can be appreciated that the packets 1 b are stored in the queue 2 in the buffer 3, although the packets 1 b exceed the threshold. This is, because after a congestion notification is provided on the packet 1a which is the first packet exceeding the threshold, a timeout interval 5 is started. During the timeout interval 5, this is until expiry of the timeout interval 5, any threshold violation is ignored. Therefore, on packets 1 b, which arrive after packet 1 a, on which a congestion notification is provided causing a timeout interval 5 to be started, no congestion notification is provided, although the packets 1 b exceed the threshold 4. Figures 1 and 2 depict for illustrative reasons two packets 1 b exceeding the threshold 4. The packets 1 b arrive after packet 1 a. On packet 1a a congestion notification is provided, the timeout interval 5 is started and has not yet expired. Therefore, on packets 1b no congestion notification is provided. The timeout interval 5 during which no congestion notification is provided on packets 1b though the packets 1b exceed the threshold 4, is symbolized by a clock in figure 1 and by an indicated time span in figure 2.

In the following, it is described what happens to packets 1 arriving at the buffer 3, in particular packet 1a and packets 1 b. The packet 1a is used to provide a congestion notification. The congestion notification on the packet 1 a is provided, because packet 1 a is the first packet of the queue 2 by which the queue 2 exceeds the threshold 4. According to the implementation described in the following, the congestion notification on the packet 1 a is provided by marking the packet 1a or dropping the packet 1a. In the embodiment that the packet 1a is marked, the packet 1 a is kept in the queue 2 in buffer 3. In the embodiment that the packet 1a is dropped, the packet 1a is thrown out of the queue 2. In preferred embodiments, the dropping of the packet 1 a is provided after the packet 1 a has already been stored in the buffer 3, but then is thrown out of the buffer 3. In another preferred embodiments, the dropping of the packet 1 a is already provided, even before the packet 1a has yet been stored in the buffer 3. In either case, the dropped packet 1a is not kept in the buffer 3 and, because it is thrown, can not be forwarded out of the buffer 3 to the receiver. Consequently, in case the congestion notification is provided on the first packet 1 a by dropping the packet 1 a, the congestion notification is done when packets 1 including the packet 1 a arrive at the buffer and a decision is made, if the queue 2 in which the packets 1 are stored is below the threshold 4 or if the storing of the packets 1 in the queue 2 cause the queue 2 to exceed the threshold 4. Again, if there are too many packets 1 arriving at the buffer 3, the size of the queue 2 will increase above the threshold 4 and there will be one packet which is the first packet by which the queue 2 actually exceeds the threshold 4 and then there will be typically again further packets 1 b by which the queue still exceeds the threshold 4.

The first packet causing the queue 2 to exceed the threshold 4, is the packet 1a. Further packets 1 b arriving after the first packet 1a might also exceed the threshold 4 or in other words keep on causing the queue 2 to be above the threshold 4. However, according to the teaching of the present invention, only on the first packet 1 a, a congestion notification is provided, while the further packets 1b although exceeding the threshold 4 are not provided by a congestion notification. It might noted, that in preferred embodiments, after the first packet 1 a further packets 1 arrive at the buffer 3 which are below the threshold 4 so that these packets 1 are therefore not considered to be dropped and then further packets 1b arrive which although they are above the threshold 4 are not dropped, because the timeout interval 5 is running. The further packets 1 b are stored in the buffer 3 and the further packets 1 b are not dropped and not marked.

Figure 2 shows the queue 2 which increases as new packets 1 arrive at the buffer 3. The increase of the queue 2 is depicted in figure 2 as an increasing line 2a of the queue 2. The queue 2 increases in queue size over time. The axis of abscissae (x-coordinate) in figure 2 is the time coordinate, the axis of ordinates (y-coordinate) in figure 2 is the size of the queue 2. The packets 1 arriving at the buffer 3 cause the queue 2 to increase, because more packets 1 arrive at enqueuing (see ref. sign. 6 in fig. 1) at the buffer 3 than packets are put out of the buffer 3 at dequeuing (see ref. sign. 7 in fig. 1) for forwarding the packets 1. As the number of the packets 1 in the queue 2 is higher than the number of packets defined by the threshold 4, the queue 2 exceeds the threshold 4. The first packet 1a which exceeds the threshold 4 or in other words which causes the queue 2 to exceed the threshold 4, is termed packet 1a. On this packet 1 a, a congestion notification is provided. In a preferred embodiment, packet 1a is marked. In a preferred embodiment, packet 1a is dropped. In another preferred embodiment, packet 1 a might be marked to indicate that the packet 1 a should be dropped and then dropped accordingly. In either case, the congestion notification causes the sender of the packet flow to decrease the data rate of the packet flow to which the marked and/or dropped packet 1 a belongs. The congestion notification causing the decrease of the data rate of the packet flow needs at least one round trip time to take effect. The congestion notification will arrive at the receiver of the packet flow which becomes aware of the dropped and thus missing packet 1 a or of the marked packet 1a in the packet flow. The receiver sends a corresponding message to the sender of the packet flow which reduces the data rate of the packet flow to which packet 1 a belongs. The packets 1 of the packet flow with the reduced data rate need the time it takes from the sender of the packets to the buffer 3 so that the packets 1 with reduced data rate will arrive with at least on round trip time (from the buffer 3 to the receiver, from the receiver to the sender, from the sender to the buffer 3) to take effect in respect of the data rate to be reduced and thus in respect of the number of packets 1 arriving at the buffer 3. Therefore, the queue 2 might decrease only at least one round trip time after the congestion notification on the first packet 1a has been provided. The decrease of the number of packets 1 in the queue 2 is symbolized by the decrease 2b of the queue 2 in figure 2.

The congestion notification is provided only on the first packet 1 a which exceeds the threshold 4. At the moment that the congestion notification is provided on packet 1a or a logical moment after the congestion notification is provided on the first packet 1 a (for example the time of one clock of the central processing unit, but at least before further packets 1, 1b are processed), a timeout interval 5 is started. Further packets 1 b arriving after packet 1 a are not provided by a congestion notification, because the congestion notification on packet 1a causes the timeout interval 5 to be started so that any threshold violation is ignored until expiry of the timeout interval 5. In particular, these packets 1b are not marked or dropped. This means that these packets 1b are kept in the buffer 3 without being marked. As they are not dropped, the queue 2 still increases after the congestion notification which has been provided only on packet 1a.

The increase of the queue 2 is in particular possible, because the threshold 4 is set below the maximum buffer capacity, i.e. below the (maximum) buffer size 10. Therefore, the buffer 3 is still able to store more packets 1 after the threshold 4 has been exceeded. In case, the queue 2 reached the maximum buffer size 10, all packets 1 exceeding the maximum buffer size 10 would have to be dropped thus causing respective congestion notifications to the senders to reduce the data rate of the packet flows.

In the described example, the maximum buffer size 10 has not reached. The packet flows to which packets 2b belong are not reduced in regard of the data rate, as on packets 2b no congestion notification is provided. Therefore, the queue 2 keeps on increasing as long as the congestion notification on packet 1 a takes time to take effect (at least one round trip time) and at this moment decreases because of the reduced data rate of the packet flow to which packet 1a belong. The decrease of queue 2b is depicted in figure 2 by the decreasing line 2b. After some time, the queue 2 might again increase as indicated by the increasing line 2c. This might be, because typically the senders of all packet flows will continuously try to increase the data rate of packet flows and enhance throughput through the network. At a certain moment, the increase of the packet flows will cause the number of the packets 1 in buffer 3 to increase again, as the reduction of the data rate of the packet flow to which packet 1 a belongs is overwhelmed by the increase of the data rate of all packet flows. Furthermore, after a certain time, the sender of the packet flow to which the packet 1a belongs thus causing a reduction of the data rate will again increase the data rate of the packet flow as long as the sender gets no further congestion notification.

The teaching of the present application which is effective in figures 1 and 2 might become clearer when comparing figure 2 with figure 3. In figure 3, a buffering of packets in a buffer 3 is implemented in a conventional manner without the teaching of the present invention. Figure 3 depicts - similarly as figure 2 - a diagram with a time coordinate as x-coordinate and the queue size as y-coordinate, thus figure 3 such as figure 2 depicts the queue size over time. In figure 3, there is no threshold 4 below the maximum size of the buffer 3. Therefore, the buffering is limited only by the maximum size or capacity of the buffer 3. The maximum size of the buffer 3 is indicated with reference sign 10. The queue 2 increases up to the maximum capacity 10 of the buffer 3. The increasing of the queue 2 is depicted as increasing line 2a. As the queue 2 reaches the maximum capacity 10 of the buffer 3, the buffer 3 cannot store more packets 1, because if the maximum capacity 10 of the buffer 3 is reached, the buffer 3 is full. Therefore, the packets 1 (more specifically 1 a, 1 b) which exceed the maximum capacity 10 of the buffer 3 can not be stored. Not only the first packet 1 a exceeding the maximum capacity 10 of the buffer 3 is dropped, but also further packets 1 b which arrive after packet 1 a and which also exceed the maximum capacity 10 of the buffer 3 are dropped. They must be dropped, because the buffer 3 is full. The dropping of the packets 1a and 1b will cause the receiver of the packet flows to which the packets 1a and 1 b belong to send one or more messages to the sender of the packet flows to which the packets 1a and 1b belong. Typically, the packets 1a and 1b belong not to the same packet flow, but to different packet flows. Furthermore, many packets 1 b will be dropped (plus packet 1a), because many packets 1b will typically keep on exceeding the maximum capacity 10 of the buffer 3. Therefore, a plurality of packet flows will be caused to reduce their data rate or in other words, one or more sender of a plurality of packet flows will be caused to reduce the data rate of a plurality of packet flows. However, it takes at least one round trip time for the data rate reduction to take effect. During that time all senders will continue to send packets and even increase the sending rates of the packet flows, as long as they have not yet received a congestion notification. This causes further typically N/2 packet losses (N = number of TCP flows). Consequently, after the time it takes until the dropping of the packets 1 takes effect (the dropping is an implicit congestion notification), the data rate of a plurality of packet flows of which the packets arrive at the buffer3 is reduced, typically of N/2 packet flows. Therefore, the queue size will decrease rapidly. The decrease of the queue size indicated with reference sign 2b is typically much stronger in the implementation depicted in figure 3 as in the implementation depicted in figure 2. The decrease of the queue 2 is sharper and deeper in figure 3 as in figure 2 (see reference sign 2b in figure 2 and figure 3). As a plurality of packet flows are reduced in data rate in figure 3 in comparison with only one packet flow reduced in data rate in figure 2, the decrease is sharper in figure 3 as in figure 2. Also, the queue 2 will decrease more in figure 3 than in figure 2 in regard of the reduced size of the queue 2, the queue 2 will decrease deeper, up to a lower level in figure 3 as in figure 2. In the embodiment in figure 3, the reduction of the data rate of a plurality of packet flows might cause the queue 2 to be reduced to zero and to stay at zero for a long time (ref. sign. 2c in figure 3). This is, the queue 2 is emptied, as less packets 1 arrive at the buffer 3 as packets 1 can potentially be forwarded by dequeuing out of the queue 2. However, if the queue 2 is empty, in particular for a long time such as in figure 3, the transmission capacity 7 is not used efficiently. Typically, the buffer 3 aims to store packets 1 in the buffer 3 until they can be forwarded. However, it is not appropriate to reduce the data rate of the packets flows arriving at the buffer 3 so much that the buffer 3 runs empty and stays empty for a certain (too long) time, because as long as the buffer 3 is empty the network capacity is left unused (see ref. sign 7). Furthermore, because of the reduced data rate, the packets of the packet flows with a reduced data rate are transmitted with reduced speed so that the network capacity in regard of bandwidth of the forwarding elements and connection is not fully used and the quality of the data which are transported as packet flows with reduced data rate might be worsened. Therefore, a reduction of the data rate of many packet flows such as is the consequence of the implementation in figure 3 is not desirable. By this it becomes clear that it is better, to provide only one congestion notification at the moment that a first packet exceeds a threshold 4, which is below the maximum capacity of the buffer 3, than to wait until the queue 2 reaches the maximum capacity 10 of the buffer 3 and than provide a plurality of congestion notifications on a respective plurality of packets which is technically necessary, because the packets must be dropped as the buffer 3 is full.

In a preferred embodiment, the threshold 4 is set below a maximum capacity 10 of the buffer 3, in particular at less than 60% of the buffer size, preferably at less than 50% of the buffer size. The lower the threshold 4 is set below the maximum capacity 10 of the buffer 3, the better global synchronization is avoid.,

The above embodiments relate to a method of providing a congestion notification on a packet 1 a exceeding a threshold 4 which is set on the size of the queue 2. The size might be defined by length or volume of the queue, in either case by a number of packets or bytes in the queue 2.

In another preferred embodiment (see figure 4), the threshold 4 is set on queuing delay (symbolized by an hourglass in fig. 4 ref. sign. 4). At dequeuing 7 of packets 1 out of the queue 2 for forwarding the packets 1 from the buffer 3, it is determined for each packet 1 taken out of the buffer 3 how long the packet 1 has been stored in the buffer 3. To underline that the step of determining, if one or more packets 1 of the queue 2 exceed the threshold 4 on queuing delay, is implemented at dequeuing 7 in the embodiment depicted in figure 4, this means when the packets 1 are put out of the buffer 3, the packets 1 a, 1 b are depicted in figure 4 as already being outside the buffer 3 and are forwarded to further network elements (ref. sign. 7). More precisely, figure 4 depicts the moment just after which the queuing delay of the latter packet 1 b (after the first packet 1a and the following packet 1 b) has been determined, when the latter packet 1 b has just been put out of the buffer 3. The first packet 1a of the queue 2 which is determined to exceed the threshold 4 on queuing delay, is provided by a congestion notification by marking the packet 1a. This is, because the packet 1 a has been stored in the buffer 3 for a time which exceeds a predetermined time defined as a threshold 4 on queuing delay and the packet 1 a is the first packet 1 a on which the exceeding of the threshold 4 is determined at the front of the queue 2 at dequeuing 7, this first packet 1a and only this first packet 1a is provided by a congestion notification. In the embodiment, depicted in the figure 4 for illustrative reasons, this first packet 1 a with an exceeding queuing delay is marked and forwarded to further network elements. The receiver of the packet flow to which this first packet 1 a belongs, is informed of the congestion notification, because this first packet 1 a is marked (explicit congestion notification). In further embodiments, not depicted in figure 4, this first packet 1 a is dropped and missing in the packet flow (implicit congestion notification). In either case, the receiver of the packet flow to which the first packet 1 a belongs on which a congestion notification is provided informs the sender of the packet flow to which this first packet 1 a belongs accordingly so that the sender will reduce the data rate of the packet flow to which this first packet 1a belongs.

Figure 5 illustrates the increase and decrease of the queue 2 of packets which exceed the threshold 4 on queuing delay. According to this embodiment the x-coordinate is a time coordinate of an ongoing time corresponding to packets which are dequeued packet-by-packet out of the buffer 3. For example, 100 packets might be dequeued in 1 millisecond. Therefore, one point on the x-coordinate indicates a moment on which one packet is dequeued. A time period on the x-coordinate thus corresponds to a certain amount of packets dequeued out of the buffer 3. The amount of packets 1 dequeued out of the buffer 3 depends on the rate how many packets 1 can be put out of the buffer 3 for forwarding. Furthermore, the more packets 1 are stored in the buffer 3, typically the more the queuing delay might increase. The y-coordinate in figure 5 refers to the delay how long a dequeued packet 1 has been stored in the buffer 3 before dequeuing, thus to the queuing delay of a stored packet. The threshold 4 indicates a threshold 4 on queuing delay. The threshold 4 might be set below a maximum buffer delay in case the buffer 3 has such a technically determined maximum buffer delay which is caused by the technical constraints of the buffer. In the example, the buffer 3 has no technically determined maximum buffer delay. The indicated line 11 refers to a maximum delay determined according to one or more of the packet flows and will be described later in detail. Further, it is noted that the packets 1 are necessarily dropped, if the queue 2 reaches the maximum buffer capacity on queue size. However, the maximum buffer capacity on queue size is not indicated in figure 5, as the y-coordinate indicates a queuing delay and not a queuing size. This is, the dimension of the y-coordinate is a time dimension on queuing delay. In the context, it should be noted that nevertheless, typically the queuing delay and the queuing size are dependent on each other, because the longer the queue size, the longer will be typically the queuing delay, as the more packets are stored in the buffer, the longer a packet typically must wait until it is forwarded.

If at dequeuing 7 of the packets 1 out of the buffer 3 it is determined that the queuing delay of one or more packets 1 exceed the threshold 4 on queuing delay, only the first packet 1 a by which the excess of queuing delay is determined is provided with a congestion notification and a timeout period 5 is started. The congestion notification on the first packet 1a can be provided by dropping the packet 1a and/or marking the packet 1a. In case further packets 1 b being dequeued after the first packet 1 a also exceed the threshold 4 on queuing delay, these further packets 1b are not provided with a congestion notification until the timeout period 5 has expired. Therefore, only the data rate of the packet flow to which the first packet 1a exceeding the threshold 4 on queuing delay belongs, is reduced to that the queue 2 will still increase (fig. 5, ref. sign. 2a) and as only a certain amount of packets 1 can be dequeued as a function of time, the delay of the packets 1 in the queue 2 will increase after the congestion notification is provided. After the congestion notification has been provided and as soon as the reduction of the data rate takes effect, the queue 2 decreases in regard of queuing delay (fig. 5, ref. sign. 2b) which is dependent also on the amount of packets being in the buffer 3. This means, the number of packets 1 stored in the buffer 3 will decrease and contemporaneously the queuing delay of the packets 1 stored in the buffer 3 will decrease accordingly, because the less packets 1 are stored in the buffer 3 the smaller is typically the queuing delay of the packets 1 stored in the buffer 3. After some time, the sender of the packet flows will again increase the data rate of the packet flows and thus more packets 1 will arrive at the buffer 3 so that also the queuing delay increases again (fig. 5, ref, sign. 2c).

In a preferred embodiment, the threshold 4 is set below a maximum predetermined delay 11 assigned to the one or more data flows. This maximum delay is not determined by the maximum buffer capacity, but the maximum predetermined delay 11 defined in this embodiment is defined according to the packet flows or data flows to which the stored packets 1 belong. For example, the maximum predetermined delay 11 might be resulting from the maximum delay which the application could possibly accept, before the quality of the application which is transported by the packet flow, to which a first packet 1 a exceeding the threshold 4 belongs, is too worse. According to this embodiment the maximum predetermined delay 11 might be the maximum delay of a particular packet flow, more precisely of the packet flow to which a packet 1 exceeding the threshold 4 belongs. As there might be a plurality of applications of a respective plurality of packet flows, there might be a plurality of maximum predetermined delays 11 respectively for each application or for each packet flow carrying a particular application. The threshold 4 is set below the maximum predetermined delay 11. Actually, even if a packet flow might technically be still acceptable in regard of quality for the application to be used as long as the maximum predetermined delay 11 is not exceeded, it might be preferable to provide already a congestion notification on a first packet 1a which exceeds the threshold 4 determined on queuing delay below the maximum predetermined delay 11, thus before the maximum predetermined delay 11 is exceeded. As a congestion notification is provided as soon as a first packet 1a exceeds the threshold 4, the data rate for only one packet flow is reduced, while if it were awaited as long as the maximum predetermined delay 11 is exceeded by the queue 2, possibly a plurality of senders of respective plurality of packet flows would receive a congestion notification as a plurality of packets 1 might exceed the maximum predetermined delay 11 of the respective packet flows. Even if the maximum predetermined delay 11 might vary for each application, a plurality of packet flows might exceed their respective maximum predetermined delay 11 and thus be provided by a congestion notification resulting in a reduction of the data rate, if there was no threshold 4. Because of the implementation with a threshold 4 which causes only one packet flow to be reduced in data rate and which causes further a start of a timeout period 5 during which any further congestion violation is ignored so to await if the reduction of the data rate of the only one packet flow, to which the first packet 1 a exceeding the threshold 4 belongs, is efficiently enough, the buffer capacity and the network capacity are better used, because it helps the avoid global synchronization of too many packet flows to be reduced in data rate at the same moment.

In a preferred embodiment, the timeout interval 5 is set in the range of 1 to 3 round trip times. The timeout interval 5 might be set at about 100, 200, 300, 400 or 500 milliseconds.

In a preferred embodiment, the threshold 4 is dynamically adapted so that the queue 2 drains to zero at least once in a predetermined time frame. This is in particular done, because at large numbers of packet flows N, together with the adaptation towards smaller interval, the initial threshold, which is in particular set at the beginning of implementing the method of controlling the buffering of the packets flows, might be too large. The queue 2 is oscillating around the threshold 4, far away from zero, which means an unnecessary queuing delay. In that case, the threshold 4 is preferably adapted so that the queue 2 drains to zero at least once in a predetermined time frame, for example within 1, 2 or 3 seconds.

In a preferred embodiment, the timeout interval 5 is dynamically adapted, based on the time that the queue 2 is above the threshold 4 and the time that the queue 2 is below the threshold 4. Preferably, the time that the queue is empty, is not taken is consideration, e.g. if the queue is empty, because there are no packets arriving at the buffer. Therefore, preferably, the timeout interval 5 is dynamically adapted, based on the time that the queue 2 is above the threshold 4 and the time that the queue 2 is below the threshold 4, but the queue 2 is not empty. In other words, preferably, the timeout interval 5 is dynamically adapted, based on the time that the queue 2 is above the threshold 4 and the time that the queue 2 is below the threshold 4, wherein the time that the queue 2 is empty is not considered. In other words, preferably, the timeout interval 5 is dynamically adapted, based on the time that the queue 2 is above the threshold 4 and the time that the non-empty queue 2 is below the threshold 4.

In a preferred embodiment, the timeout interval 5 is determined as a function of the time that the queue 2 is above the threshold 4, the time that the queue 2 is below the threshold 4, wherein preferably the time that the queue is empty is not considered, a scaling parameter gamma and the initial interval which is the value of the timeout interval as initially set according to the formula:

at any packet enqueueing do:

$$\text{theta} := \text{cumulative time \{above} - \text{below\} threshold}$$

$$k := \max(1, \text{gamma} * \text{theta})$$

$$\text{interval} := \text{initial\_interval}/k$$

which applies in the embodiment, that the threshold 4 is defined on queue size and the step of determining if the queue 2 exceeds the threshold 4 is determined at enqueuing 6 of the packets 1 in the buffer 3. In the above formula, k is a factor, which is a maximum of 1 and of a product of a scaling parameter gamma and a parameter theta, wherein theta is a function of cumulative time of a time that the queue 2 is above the threshold 4 and a time that the queue 2 is below the threshold 4, wherein preferably the time that the queue 2 is empty is not considered.

In a preferred embodiment, the timeout interval 5 is determined as a function of the time that the queue 2 is above the threshold 4, the time that the queue 2 is below the threshold 4, wherein preferably the time that the queue 2 is empty is not considered, a scaling parameter gamma and the initial interval which is the value of the timeout interval as initially set according to the formula:

at any packet dequeuing do:

$$\text{theta} := \text{cumulative time \{above} - \text{below\} threshold}$$

$$k := \max(1, \text{gamma} * \text{theta})$$

$$\text{interval} := \text{initial\_interval}/k$$

which applies in the embodiment, that the threshold 4 is defined on queuing delay and the step of determining if the queue 2 exceeds the threshold 4 is determined at dequeuing 7 of the packets 1 out of the buffer 3. In the above formula, k is a factor, which is a maximum of 1 and of a product of a scaling parameter gamma and a parameter theta, wherein theta is a function of cumulative time of a time that the queue 2 is above the threshold 4 and a time that the queue 2 is below the threshold 4, wherein preferably the time that the queue 2 is empty is not considered.

In a preferred embodiment, the timeout interval 5 is started, if the queue 2 is determined to be empty. In this embodiment, the timeout interval 5 is started not only, if a congestion notification is provided on a first packet 1 a exceeding the threshold 4, but the timeout interval 5 is also started in case the queue 2 is determined to be empty.

In a preferred embodiment, the step of determining at enqueuing 6 if a packet 1 is to be dropped for implicit congestion notification is implemented according to the formula:

```
at any packet enqueuing do:

    now := actual time
    if queue_size > threshold && now > next_possible_drop:

        drop this packet
        next_possible_drop := now + interval
```

In a preferred embodiment, the step of determining at enqueuing 6 if a packet 1 is to be marked for explicit congestion notification is implemented according to the formula:

```
at any packet enqueuing do:

    now := actual time
    if queue_size > threshold && now > next_possible_mark:

        mark this packet
        next_possible_mark := now + interval
```

In a preferred embodiment, the step of determining at dequeuing 7 if a packet 1 is to be dropped for implicit congestion notification is implemented according to the formula:

```
at any packet dequeuing do:

    now := actual time
    if queuing_delay > threshold && now > next_possible_drop:

        drop this packet
        next_possible_drop := now + interval
```

In a preferred embodiment, the step of determining at dequeuing 7 if a packet 1 is to be marked for explicit congestion notification is implemented according to the formula:

```
at any packet dequeuing do:

    now:= actual time
    if queuing_delay > threshold && now > next_possible_mark:
```

mark this packet
next_possible_mark := now + interval

In the above formulas, the parameter interval refers to the timeout interval 5.

In a preferred embodiment, the step of starting the timeout interval 5 in case the queue 2 is empty is implemented according to the formula:

if the queue is empty:

next_possible_drop : = now + interval.

In the above formula, the parameter interval refers to the timeout interval 5. The formula might be adapted to the embodiment of marking a packet by replacing the feature next_possible_drop by the feature next_possible_mark.

The present invention has the primary effect of a fairly even distribution of rate reductions over time, thereby avoiding global synchronization.

Furthermore and in addition to the advantages described throughout the specification, namely in particular to at least achieve an improved solution to avoid global synchronization, the present invention - from an engineering perspective - reduces the buffer size requirements on packet line cards, towards single chip router designs with on-chip buffer only, this is a buffer integrated on the chip (no separate element) thus being smaller and cheaper.

From an operating perspective it improves the capacity utilization and reduces queuing delay and jitter for better real time performance without the need for traffic segregation.

**Claims**

1. A method for controlling buffering of packets (1) in a communication network, the method comprising:

   - storing packets (1) of one or more packet flows in a queue (2) of a buffer (3);
   - setting a threshold (4) on the queue (2);
   - determining whether the queue (2) exceeds the threshold, **characterized by** that:
   - if the queue (2) exceeds the threshold (4), providing a congestion notification on a first packet (1a) of the queue (2) causing the exceeding of the threshold (4) and starting a timeout interval (5); and
   - ignoring any threshold violation until expiry of the timeout interval (5) by not providing a congestion notification on further packets (1 b) of the queue (2) causing the exceeding of the threshold (4) during the timeout interval (5).

2. The method according to claim 1, wherein the timeout interval (5) is set in the range of 1 to 3 round trip times.

3. The method according to claim 1, wherein the timeout interval (5) is dynamically adapted, based on the time that the queue (2) is above the threshold (4) and the time that the queue (2) is below the threshold (4), but not empty.

4. The method according to claim 3, wherein the timeout interval (5) is determined as a function of

$$theta := cumulative\ time\ \{above - below\}\ threshold$$

$$k := max(1, gamma * theta)$$

$$interval := initial\_interval/k$$

   wherein k is a factor, which is a maximum of 1 and a product of a scaling parameter gamma and a parameter theta, wherein theta is a function of a cumulative time of a time that the queue (2) is above the threshold (5) and a time that the queue (2) is below the threshold (5), but not empty.

5. The method according to claim 1, wherein the method further comprises: - starting the timeout interval (5), if the queue (2) is determined to be empty.

**6.** The method according to claim 1, wherein the threshold (4) is dynamically adapted so that the queue (2) drains to zero at least once in a predetermined time frame.

**7.** The method according to claim 1, wherein the step of setting a threshold (4) comprises:

- setting the threshold (4) on queue size, wherein the queue size is defined by a length or a volume of the queue (2).

**8.** The method according to claim 7, wherein the step of determining whether the queue (2) exceeds the threshold (4) is executed at enqueuing (6) of the packets (1) of the one or more packet flows in the queue (2).

**9.** The method according to claim 7, wherein the threshold (4) is set below a maximum capacity (10) of the buffer (3), in particular at less than 60% of the buffer size, preferably at less than 50% of the buffer size.

**10.** The method according to claim 1, wherein the step of setting a threshold (4) comprises:

- setting the threshold (4) on queuing delay.

**11.** The method according to claim 10, wherein the step of determining whether the queue (2) exceeds the threshold (4) is executed at dequeuing (7) of the packets (1) of the one or more packet flows out of the queue (2).

**12.** The method according to claim 10, wherein the threshold (4) is set below a maximum predetermined delay (11) assigned to the one or more packet flows.

**13.** The method according to claim 1, wherein the step of providing a congestion notification on a first packet (1a) comprises:

- dropping the first packet (1a) and/or marking the first packet (1a).

**14.** A network element (8) for a communication network, the network element (8) is adapted to store packets (1) of one or more packet flows in a queue (2) of a buffer (3), to set a threshold (4) on the queue (2), to determine whether the queue (2) exceeds the threshold (4), **characterized by** that: if the queue (2) exceeds the threshold (4), to provide a congestion notification on a first packet (1a) of the queue (2) causing the exceeding of the threshold (4) and to start a timeout interval (5) and to ignore any threshold violation until expiry of the timeout interval (5) by not providing a congestion notification on further packets (1 b) of the queue (2) causing the exceeding of the threshold (4) during the timeout interval (5).

**15.** A computer program product adapted to perform the method of claim 1, when executed on a control unit (9).

**Patentansprüche**

**1.** Verfahren zur Steuerung der Pufferung von Paketen (1) in einem Kommunikationsnetzwerk, wobei das Verfahren umfasst:

- das Speichern von Paketen (1) eines oder mehrerer Paketströme in einer Warteschlange (2) eines Puffers (3);
- einen Grenzwert (4) für die Warteschlange (2) festsetzend;
- das Bestimmen, ob die Warteschlange (2) den Grenzwert überschreitet, **dadurch gekennzeichnet, dass**:
- wenn die Warteschlange (2) den Grenzwert (4) überschreitet, die Ausgabe einer Überlastungsnachricht auf einem ersten Paket (1 a) der Warteschlange (2), welche das Überschreiten des Grenzwerts (4) verursacht, und das Einleiten eines Timeout-Intervalls (5); und
- das Ignorieren jeglicher Timeout-Verletzungen bis zum Ende des Timeout-Intervalls (5), indem so lange keine Überlastungsnachricht zu weiteren Paketen (1 b) der Warteschlange (2) ausgegeben wird, welche die Überschreitung des Grenzwerts (4) während des Timeout-Intervalls (5) verursacht.

**2.** Das Verfahren nach Anspruch 1, wobei das Timeout-Intervall (5) im Bereich von 1 bis 3 Round-Trip-Zeiten festgelegt wird.

**3.** Das Verfahren nach Anspruch 1, wobei das Timeout-Intervall (5) dynamisch angepasst wird, und zwar auf der Grundlage der Zeitdauer, um welche die Warteschlange (2) über dem Grenzwert (4) liegt, sowie der Zeitdauer, im Verlauf derer die Warteschlange (2) unter dem Grenzwert (4) liegt, ohne leer zu sein.

4. Das Verfahren nach Anspruch 3, wobei das Timeout-Intervall (5) bestimmt wird als Funktion von

$$\text{Theta} := \text{kumulative Zeitdauer \{über} - \text{unter\} Grenzwert}$$

$$k := \max(1, \text{gamma} * \text{Theta})$$

$$\text{Interval} := \text{initial\_interval}/k$$

wobei k ein Faktor ist, welcher maximal 1 beträgt und sich als Produkt eines Skalierungs-Parameters Gamma und eines Theta-Parameters errechnet, wobei Theta eine Funktion einer kumulativen Zeitdauer einer Zeitdauer ist, im Verlauf welcher die Warteschlange (2) über dem Grenzwert (5) liegt, und einer weiteren Zeitdauer, im Verlauf welcher die Warteschlange (2) unter dem Grenzwert (5) liegt, ohne jedoch leer zu sein.

5. Das Verfahren nach Anspruch 1, wobei das Verfahren weiterhin umfasst:

   - das Staren des Timeout-Intervalls (5) dann, wenn bestimmt wird, dass die Warteschlange (2) leer ist.

6. Das Verfahren nach Anspruch 1, wobei der Grenzwert (4) dergestalt dynamisch angepasst wird, dass die Warteschlange (2) mindestens einmal im vordefinierten Zeitrahmen auf Null entleert wird.

7. Das Verfahren nach Anspruch 1, wobei der besagte Schritt des Festsetzens eines Grenzwerts (4) umfasst:

   - das Festsetzen eines Grenzwerts (4) für die Größe der Warteschlange, wobei die Warteschlangengröße von einer Länge oder einem Volumen der Warteschlangen (2) definiert wird.

8. Das Verfahren nach Anspruch 7, wobei der Schritt des Bestimmens, ob die Warteschlange (2) den Grenzwert (4) überschreitet, beim Einreihen (6) von einem Paket (1) des einen oder der mehreren Paketströmen in die Warteschlange (2) erfolgt.

9. Das Verfahren nach Anspruch 7, wobei der Grenzwert (4) unterhalb einer Maximalkapazität (10) des Puffers (3) festgesetzt wird, konkret mit weniger als 60 % der Puffergröße und vorzugsweise mit weniger als 50 % der Puffergröße.

10. Das Verfahren nach Anspruch 1, wobei der besagte Schritt des Festsetzens eines Grenzwerts (4) umfasst:

   - das Festsetzen eines Grenzwerts (4) für die Warteschlangenverzögerung.

11. Das Verfahren nach Anspruch 10, wobei der Schritt des Bestimmens, ob die Warteschlange (2) den Grenzwert (4) überschreitet, beim Ausreihen (7) von einem Paket (1) des einen oder der mehreren Paketströme aus der Warteschlange (2) erfolgt.

12. Das Verfahren nach Anspruch 10, wobei der Grenzwert (4) unterhalb einer maximalen vordefinierten Verzögerung (11) festgesetzt wird, die dem einen oder den mehreren Paketströmen zugeordnet ist.

13. Das Verfahren nach Anspruch 1, wobei der Schritt des Ausgebens einer Überlastungsnachricht zu einem ersten Paket (1 a) umfasst: das Verwerfen des ersten Pakets (1a) und/oder das Markieren des ersten Pakets (1a).

14. Netzwerkelement (8) für ein Kommunikationsnetzwerk, wobei das Netzwerkelement (8) dafür ausgelegt sind, um Pakete (1) eines oder mehrerer Paketströme in der Warteschlange (2) eines Puffers (3) zu speichern, um einen Grenzwert (4) für die Warteschlange (2) festzusetzen, um zu bestimmen, ob die Warteschlange (2) den Grenzwert (4) überschreitet, **dadurch gekennzeichnet, dass** das Netzwerkelement:

dann, wenn die Warteschlange (2) den Grenzwert (4) überschreitet, eine Überlastungsnachricht auf einem ersten Paket (1a) der Warteschlange (2) zur Verfügung stellt, welche die Überschreitung des Grenzwerts (4) verursacht, und ein Timeout-Intervall (5) startet sowie jedwede Grenzwertüberschreitung solange ignoriert, bis das Timeout-Intervall (5) abläuft, indem während des Timeout-Intervalls (5) keine Überlastungsnachricht auf weiteren Paketen (1b) der Warteschlange (2) ausgegeben wird, welche die Überschreitung des Grenzwerts (4) verursacht.

**15.** Ein Computerprogramm-Produkt, ausgelegt für die Durchführung des Verfahren nach Anspruch 1, wenn es auf eine Steuerungseinheit (9) ausgeführt wird.

**Revendications**

**1.** Procédé de contrôle de mise en mémoire tampon de paquets (1) dans un réseau de communication, le procédé comprenant

- le stockage de paquets (1) d'un ou plusieurs flux de paquets dans une file d'attente (2) d'une mémoire tampon (3) ;
- l'établissement d'un seuil (4) pour la file d'attente (2) ;
- la détermination du fait que la file d'attente (2) dépasse le seuil (4) **caractérisée en ce que** :
- si la file d'attente (2) dépasse le seuil (4), émission d'une notification de congestion sur un premier paquet (1a) de la file d'attente (2) entraînant le dépassement du seuil (4), et lancement d'un délai de temporisation (5) ; et
- toute violation de seuil est ignorée jusqu'à expiration du délai de temporisation (5) en ne fournissant pas de notification de congestion sur d'autres paquets (1b) de la file d'attente (2) entraînant le dépassement du seuil (4) pendant le délai de temporisation (5).

**2.** Procédé selon revendication 1, dans lequel le délai de temporisation (5) est défini dans une plage comprise entre 1 et 3 temps d'aller-retour.

**3.** Procédé selon la revendication 1, dans lequel le délai de temporisation (5) est adapté dynamiquement, en fonction du temps pendant lequel la file d'attente (2) est au-dessus du seuil (4) et du temps pendant lequel la file d'attente (2) est en dessous du seuil (4), mais pas vide.

**4.** Procédé selon la revendication 3, dans lequel le délai de temporisation (5) est déterminé en fonction de

$$\text{thêta : = seuil de temps cumulé \{au-dessus – en dessous\}}$$

$$k : = \max (1, gamma * thêta)$$

$$\text{délai : = délai\_initial/k}$$

dans lequel k est un facteur, qui est le maximum entre 1 et un produit du paramètre de mise à l'échelle gamma et d'un paramètre thêta, dans lequel thêta est une fonction d'un temps cumulé d'un temps pendant lequel la file d'attente (2) est au-dessus du seuil (5) et d'un temps pendant lequel la file d'attente (2) est en dessous du seuil (5), mais pas vide.

**5.** Procédé selon la revendication 1, dans lequel le procédé comprend en outre :

- le lancement du délai de temporisation (5) si la file d'attente (2) est déterminée vide.

**6.** Procédé selon la revendication 1, dans lequel le seuil (4) est adapté dynamiquement de sorte que la file d'attente (2) descende jusqu'à zéro au moins une fois dans une période de temps prédéterminée.

**7.** Procédé selon la revendication 1, dans lequel l'étape de définition d'un seuil (4) comprend :

   - la définition du seuil (4) sur la taille de la file d'attente, dans lequel la taille de la file d'attente est définie par une longueur ou un volume de la file d'attente (2).

**8.** Procédé selon la revendication 7, dans lequel l'étape permettant de déterminer si la file d'attente (2) dépasse le seuil (4) est exécutée à la mise en file d'attente (6) des paquets (1) d'un ou plusieurs flux de paquets dans la file d'attente (2).

**9.** Procédé selon la revendication 7, dans lequel le seuil (4) est défini sous une capacité maximale (10) de la mémoire tampon (3), en particulier à moins de 60 % de la taille de la mémoire tampon, de préférence à moins de 50 % de la taille de la mémoire tampon.

**10.** Procédé selon la revendication 1, dans lequel l'étape de définition d'un seuil (4) comprend :

   - la définition du seuil (4) sur un retard de file d'attente.

**11.** Procédé selon la revendication 10, dans lequel l'étape permettant de déterminer si la file d'attente (2) dépasse le seuil (4) est exécutée au retrait de la file d'attente (7) des paquets (1) d'un ou plusieurs flux de paquets dans la file d'attente (2).

**12.** Procédé selon la revendication 10, dans lequel le seuil (4) est défini en dessous d'un retard maximum prédéterminé (11) attribué à un ou plusieurs flux de paquets.

**13.** Procédé selon la revendication 1, dans lequel l'étape d'émission d'une notification de congestion sur un premier paquet (1 a) comprend :

   - l'élimination du premier paquet (1a) et/ou le marquage du premier paquet (1a)

**14.** Élément de réseau (8) pour un réseau de communication, l'élément de réseau (8) étant adapté pour stocker des paquets (1) d'un ou plusieurs flux de paquets dans une file d'attente (2) d'une mémoire tampon (3), pour définir un seuil (4) sur la file d'attente (2), pour déterminer si la file d'attente (2) dépasse le seuil (4), **caractérisé en ce que** :

   si la file d'attente (2) dépasse le seuil (4), il fournit une notification de congestion sur un premier paquet (1 a) de la file d'attente (2) entraînant le dépassement du seuil (4) et lance un délai de temporisation (5) et ignore toute violation du seuil jusqu'à expiration du délai de temporisation (5) en ne fournissant pas de notification de congestion sur d'autres paquets (1 b) de la file d'attente (2) entraînant le dépassement du seuil (4) pendant le délai de temporisation (5).

**15.** Programme informatique adapté pour réaliser le procédé de la revendication 1, lorsqu'il est exécuté sur une unité de commande (9).

FIG. 1

FIG. 2

FIG. 3

FIG. 4

FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 5914936 A